# EUROPÄISCHE PATENTSCHRIFT

(11) **EP 2 988 947 B1**
(45) Veröffentlichungstag und Bekanntmachung des Hinweises auf die Patenterteilung: **26.07.2017**
(21) Anmeldenummer: 14721798.8
(22) Anmeldetag: 17.04.2014
(51) Int. Cl.: B41M 5/26, B41M 5/00, B41M 3/14

(54) **VERFAHREN UND VORRICHTUNG ZUR LASERMARKIERUNG MIT GRAUSTUFENKALIBRIERUNG**
METHOD AND DEVICE FOR LASER MARKING WITH GREY LEVEL CALIBRATION
PROCÉDÉ ET DISPOSITIF DE MARQUAGE AU LASER AVEC ÉTALONNAGE DES NIVEAUX DE GRIS

(30) Priorität: 23.04.2013 DE 102013207379
(43) Veröffentlichungstag der Anmeldung: 02.03.2016
(73) Patentinhaber: Bundesdruckerei GmbH, 10969 Berlin (DE)
(72) Erfinder: RICHTER, Werner, 80999 München (DE)
(74) Vertreter: Patentanwälte Bressel und Partner mbB
(86) Internationale Anmeldenummer: PCT/EP2014/057982
(87) Internationale Veröffentlichungsnummer: WO 2014/173835

(56) Entgegenhaltungen:
- EP-A1- 2 181 858
- EP-A2- 1 527 903
- WO-A1-2010/089035
- DE-A1-102010 010 070
- US-B1- 6 252 196

## Beschreibung

Die Erfindung betrifft ein Verfahren zum Lasermarkieren von Sicherheitsdokumenten sowie eine entsprechende Vorrichtung, mit denen Grafikinformationen, die eine Grafik mit unterschiedlichen Helligkeitswerten beschreiben, in ein Sicherheitsdokument gespeichert werden können.

Aus dem Stand der Technik ist es bekannt, Sicherheitsdokumente unter Verwendung von Laserstrahlung zu markieren. Insbesondere Sicherheitsdokumente, welche auf Kunststoffbasis hergestellt sind, können mittels Laserstrahlung so markiert werden, dass Grafikinformationen auf der Oberfläche oder im Innern des Sicherheitsdokuments gespeichert werden. Um eine Speicherung im Innern eines Sicherheitsdokuments zu erreichen, werden beispielsweise einer transparenten Materialschicht Pigmente zugefügt, die zwar eine Absorption von Laserstrahlung begünstigen, jedoch eine allgemeine Transparenz des Materials gar nicht oder nur unwesentlich beeinträchtigen. Die eingestrahlte Laserstrahlung wird in der mit den Pigmenten versehenen Schicht lokal absorbiert und hierüber beispielsweise eine Karbonisierung des Kunststoffs bewirkt. Abhängig von der eingestrahlten Energie stellen sich unterschiedliche Schwärzungsgrade, d.h. unterschiedliche Graustufen, ein. Die für ein Erzeugen einer bestimmten Graustufe notwendige Energie ist hierbei abhängig von dem zu markierenden Sicherheitsdokument.

Ein Verfahren zum Lasermarkieren von Sicherheitsdokumenten ist in der
DE 10 2010 010 070 A offenbart.

Für identisch gefertigte Sicherheitsdokumentrohlinge ist die Energiemenge, die zum Herbeiführen eines bestimmten Schwärzungsgrads oder eines bestimmten Graustufenwerts benötigt wird, vorbekannt. Bei aus dem Stand der Technik bekannten Vorrichtungen werden Laser eingesetzt, welche über ein Lasersteuersignal hinsichtlich ihrer Laserlichtleistung oder einer Laserpulsenergie steuerbar sind. Bevorzugt werden gepulste Laser zur Lasermarkierung eingesetzt, und die Grafikinformationen punktweise zusammengesetzt. Als Grafikinformationen werden hier alle grafisch darstellbaren Informationen angesehen. Die Grafikinformationen können somit ein Bild, z.B. ein Gesichtsbild, eine Strichzeichnung, Text, Zahlen oder Ähnliches einzeln oder in beliebiger Kombination umfassen. Besonders bevorzugt wird für jeden Bildpunkt, der einen bestimmten Graustufenwert aufweist, genau ein Laserpuls zur Markierung verwendet. Es ist jedoch auch möglich, mehrere Laserpulse definierter Energie zur Erzeugung ein und desselben Bildpunktes zu verwenden oder mehrer Punkte teilweise zu überlappen. Über ein solches Lasersteuersignal lässt sich die Laserleistung bzw. Laserpulsenergie jedoch nur relativ beeinflussen. Dies bedeutet, dass eine präzise Laserleistung oder Laserpulsenergie nicht präzise vorgegeben werden kann. Daher ist es notwendig, eine Kalibration in der Weise auszuführen, dass für jeden Graustufenwert, der markiert werden soll, eine Kalibration in der Weise ausgeführt wird, dass das Lasersteuersignal, d.h. der Steuerwert des Lasersteuersignals, variiert wird, bis eine Markierung mit dem entsprechenden Graustufenwert erreicht ist. Anhand der so ermittelten Steuerwerte des Lasersteuersignals kann dann eine Zuordnungsfunktion erzeugt werden, die zu markierenden Graustufenwerten einen entsprechenden Steuersignalwert zuordnet, sodass eine entsprechende Laserpulsenergie bzw. Laserpulsleistung zur Markierung eines Bildpunktes mit dem entsprechenden Graustufenwert erreicht wird. Da aufgrund von thermischen Schwankungen und anderen Umwelteinflüssen für denselben Steuerwert des Lasersteuersignals und die tatsächlich erzeugte Laserlichtleistung oder Laserpulsenergie leicht variieren kann, ist es aus dem Stand der Technik bekannt, einen Teil des erzeugten Laserlichts auf eine Photodiode auszukoppeln und deren Signal, welches ein Maß für die erfasste Laserleistung bzw. Pulsenergie des ausgekoppelten Laserlichts ist, als Regelsignal für einen Regelkreis zu nutzen, der eine Korrektur des Lasersteuersignals bewirkt. Hierüber ist es zwar möglich, über längere Zeiträume eine kalibrierte Vorrichtung zur Lasermarkierung zu verwenden, um Sicherheitsdokumente mit einer ausreichenden Qualität und Reproduzierbarkeit der einzelnen Graustufenwerte zu erreichen, jedoch sind in Abständen erneute Kalibrationszyklen notwendig, bei denen die tatsächlich erzeugten Graustufenwerte mit den zu erzielenden Graustufenwerten verglichen werden. Diese Kalibrierungen können nur von speziell geschulten Technikern ausgeführt werden und/oder erfordern aufwendige optische Messeinrichtungen, die Graustufenwerte präzise miteinander vergleichen können.

An dieser Stelle wird angemerkt, dass der optisch wahrgenommene Graustufenwert in der Regel durch eine Mehrzahl von Bildpunkten bestimmt ist. Zum einen spielt der tatsächliche Graustufenwert der einzelnen Bildpunkte eine Rolle. Ebenso wird der Wahrnehmbare Graustufenwert jedoch auch durch eine Bildpunktdichte, d.h. eine Bildpunktanzahl pro Fläche beeinflusst. Inder Regel werden die einzelnen Bildpunkte jeweils in einem für eine Grafikinformation einheitlichen Raster in ein Dokument eingebracht. Selbstverständlich ist es auch möglich die Bildpunkte in unterschiedlichen Abständen zueinander anzuordnen. Bei Ermitteln oder Festlegen der Graustufenwerte für die einzelnen Bildpunkte für das Lasermarkieren, sind die Abstände bekannt, in denen die Bildpunkte in einem Dokument ausgebildet werden. Entsprechend werden die Gaustufenwerte für die einzelnen Bildpunkte festgelegt. In dem Sicherheitsdokument, in dem sich die ausgebildeten Bildpunkte einander teilweise überlappen können, ergibt sich dann eine Grafikinformation, die bei einem Betrachter die gewünschten Graustufeneindrücke hervorruft. Dieses setzt jedoch voraus, dass nicht nur der Abstände der Bildpunkte, sondern eben auch die individuellen Graustufenwerte der einzelnen Bildpunkte, die mittels Lasermarkierung ausgebildet werden, korrekt sind.

Der Erfindung liegt daher die technische Aufgabe zugrunde, ein Verfahren und eine Vorrichtung zu schaffen, mit denen Lasermarkierungen ausführbar sind und die Notwendigkeit eines Eingriffs durch einen Servicetechniker verringert ist und dennoch zuverlässig präzise Graustufenmarkierungen ausführbar sind.

### Grundidee der Erfindung

Der Erfindung liegt die Idee zugrunde, ein Verfahren und eine Vorrichtung so auszubilden, dass die Vorrichtung zur Lasermarkierung mit einem eine Laserleistung oder Laserpulsenergie absolut messenden Messkopf ausgestattet ist, und ein so gewonnenes Messergebnis zu verwenden, um eine Zuordnungsfunktion, welche Graustufenwerten Lasersteuerwerte zuordnet, zu verändern und geeignet anzupassen.

### Bevorzugte Ausführungsformen

Geschaffen wird ein Verfahren zum Lasermarkieren von Sicherheitsdokumenten, umfassend die Schritte:
a) Erfassen von Grafikinformationen, die eine Grafik mit unterschiedlichen Helligkeitswerten beschreiben;
b) Erzeugen eines Positionssteuersignals und eines Lasersteuersignals abhängig von den Grafikinformationen, wobei jedem Helligkeitswert eine Soll-Laserlichtleistung oder Soll-Laserpulsenergie zugeordnet ist, die zum Herbeiführen einer Lasermarkierung mit dem entsprechenden Helligkeitswert in einem Sicherheitsdokument benötigt wird und beim Erzeugen des Lasersteuersignals mittels einer Zuordnungsfunktion jedem Helligkeitswert ein Steuerwert zugeordnet wird, der zum Erzeugen von Laserlicht mit der entsprechenden Laserlichtleistung oder Laserpulsenergie vorgesehen ist,
c) Ansteuern eines Lasers mittels des Lasersteuersignals und Abstrahlen von Laserleicht mit einer Laserlichtleistung oder Laserpulsenergie gemäß dem Lasersteuersignal; und
d) zeitlich angepasstes Ansteuern mindestens einer Positionssteuereinrichtung mittels des Positionssteuersignals, sodass das abgestrahlte Laserlicht relativ zu dem, vorzugsweise in einer Dokumentenaufnahme angeordneten, Sicherheitsdokument positioniert wird,
sodass durch iteratives Ausführen der Verfahrensschritte b) bis d) eine positionsgerechte Markierung des Sicherheitsdokuments mit der die unterschiedlichen Helligkeitswerte aufweisenden Grafik ausgeführt wird, wobei mindestens ein Kalibrierschritt ausgeführt wird, wobei beim Ausführen des Kalibrierschrittes das Lichtsteuersignal mit einem Steuerwert für einen Helligkeitswert erzeugt wird und während des Kalibrierschritts konstant gehalten wird, ein definierter Anteil des Laserlichts aus einem Strahlengang für die Lasermarkierung ausgekoppelt und in einen absolut messenden Messkopf geführt wird und eine Leistung des auf den Messkopf geführten ausgekoppelten Anteils des Laserlichts oder dessen in dem Messkopf deponierte Energie absolut gemessen wird, und aus der gemessenen Leistung oder Energie des ausgekoppelten Anteils des Laserlichts die für die Markierung zur Verfügung stehende Leistung oder Pulsenergie ermittelt wird und die ermittelte Leistung mit der Soll-Laserlichtleistung oder die ermittelte Pulsenergie mit der Soll-Laserpulsenergie verglichen wird und die Kalibrierung über eine Änderung der Zuordnungsfunktion angepasst wird, wenn bei dem Vergleich eine Differenz oberhalb einer vorgegebenen Tolleranzschwelle ermittelt wird.

Ferner wird eine Vorrichtung zum Lasermarkieren geschaffen, welche umfasst:
a) eine Steuereinrichtung mit einer Schnittstelle zum Erfassen von Grafikinformationen, die eine Grafik mit unterschiedlichen Helligkeitswerten beschreiben;
b) wobei die Steuereinrichtung ausgebildet ist, ein Positionssteuersignal und ein Lasersteuersignal abhängig von den Grafikinformationen zu erzeugen; wobei jedem Helligkeitswert eine Soll-Laserlichtleistung oder Soll-Laserpulsenergie zugeordnet ist, die zum Herbeiführen einer Lasermarkierung mit dem entsprechenden Helligkeitswert in einem Sicherheitsdokument benötigt wird und mittels einer Zuordnungsfunktion jedem Helligkeitswert ein Steuerwert zugeordnet wird, der zum Erzeugen von Laserlicht mit der entsprechenden Laserlichtleistung oder Laserpulsenergie vorgesehen ist;
c) einen Laser, dessen Laserlichtleistung mittels des Lasersteuersignals steuerbar ist, und Laserlicht mit einer Laserlichtleistung oder Laserpulsenergie gemäß dem Lasersteuersignal abstrahlt;
   und
d) vorzugsweise eine Aufnahme zum Aufnehmen eines zu markierenden Sicherheitsdokuments und
e) eine Strahlführungsoptik zum Führen des von dem Laser abgestrahlten Laserlichts auf das Sicherheitsdokument;
   sowie
f) mindestens eine mittels des Positionssteuersignals ansteuerbare Positionierungssteuereinrichtung zum Positionieren des Laserlichts zeitlich angepasst an die mittels des Lasersteuersignals festgelegte Laserlichtleistung oder Laserpulsenergie relativ zu dem, vorzugsweise in der Aufnahme aufgenommenen, Sicherheitsdokument, sodass eine positionsgerechte Markierung des Sicherheitsdokuments mit der die unterschiedlichen Helligkeitswerte aufweisenden Grafik ausführbar ist,
wobei die Vorrichtung einen absolut messenden Messkopf sowie eine Auskoppeleinheit zum Auskoppeln eines definierten Anteils des Laserlichts aus einem Strahlengang für die Lasermarkierung und Führen des ausgekoppelten Anteils auf den absolut messenden Messkopf umfasst, wobei der Messkopf ausgeführt ist, eine Leistung oder Energie des auf den Messkopf geführten ausgekoppelten Anteils des Laserlichts absolut zu messen und ein die absolut gemessene Lichtleistung oder deponierte Energie repräsentierendes Kalibriersignal auszugeben, wobei die Steuereinrichtung ausgebildet ist, das eine erfasste Laserlichtleistung oder Energie repräsentierendes Kalibriersignal zu erfassen und auszuwerten, wobei die Steuereinrichtung ferner ausgebildet ist, im Betrieb der Vorrichtung mindestens einen Kalibrierschritt auszuführen, bei dem das Lasersteuersignal für einen Helligkeitswert erzeugt und während des Kalibrierschritts konstant gehalten wird, aus der gemessenen Laserlichtleistung oder Laserpulsenergie des ausgekoppelten Anteils des Laserlichts die für die Markierung zur Verfügung stehende Leistung oder Pulsenergie zu ermitteln und die ermittelte Leistung mit der Soll-Laserlichtleistung oder die ermittelte Pulsenergie mit der Soll-Laserpulsenergie zu vergleichen und die Kalibrierung über eine Änderung der Zuordnungsfunktion bewirkt, wenn bei dem Vergleich eine Differenz oberhalb einer vorgegebenen Tolleranzschwelle ermittelt ist.

Der Vorteil der Erfindung besteht darin, dass eine Kalibration der Vorrichtung zur Lasermarkierung ausgeführt werden kann, ohne dass hierfür eine speziell geschulte Person notwendig ist. Insbesondere bei dezentral eingesetzten Lasermarkierungsvorrichtungen ist dies von besonderem Vorteil. Ist die Steuereinrichtung der Vorrichtung so ausgebildet, dass diese eine Zuordnungsfunktion empfangen kann oder für unterschiedliche Markierungsvorgänge eine von verschiedenen Zuordnungsfunktionen ausgewählt werden kann, so ist es ferner möglich, unterschiedliche Dokumentenrohlinge mit ein und derselben Vorrichtung zu markieren und hierfür Kalibrationen auszuführen. Dies ist insbesondere dann vorteilhaft, wenn neuartige Dokumentenrohlinge zum Einsatz gebracht werden sollen, für die es lediglich erforderlich ist, eine an den Dokumentenrohling angepasste Zuordnungsfunktion bereitzustellen, um beliebige Graustufengrafiken in dem Dokumentenrohling mit gleich bleibenden, jeweils absolute Grauwerte aufweisenden Graustufengrafiken zu markieren. Angepasst an den speziellen Dokumentenrohling bzw. eine hierfür ausgewählte Markierungsebene muss lediglich die entsprechende Zuordnungsfunktion bereitgestellt, empfangen und/oder ausgewählt werden, um eine zuverlässige Markierung zu ermöglichen.

Bei einer bevorzugten Ausführungsform der Erfindung ist vorgesehen, dass der absolut messende Messkopf eine Thermosäule umfasst. Eine Thermosäule besteht aus einem Thermoelement oder aus mehreren thermisch parallel und elektrisch in Reihe geschalteten Thermoelementen, wobei jeweils eine Verbindungsstelle des Thermoelements mit Strahlung beaufschlagt wird und die andere vor der Strahlung geschützt ist. Mit einer einmal kalibrierten Thermosäule kann eine deponierte Strahlungsleistung zuverlässig absolut bestimmt werden. Eine solche Präzision lässt sich beispielsweise mittels Photodioden oder anderen derzeit bekannten Halbleiterbauelementen nicht erreichen, da deren Messwerte insbesondere stark von den Umgebungsbedingungen abhängen und schwanken.

Ein bevorzugtes Verfahren sieht daher vor, dass eine Leistung des Laserlichts mittels eines eine Thermosäule umfassenden Messkopfes gemessen wird.

Die während eines Markiervorgangs eventuell auftretenden minimalen Schwankungen der tatsächlich erzeugten Laserleistung bzw. Laserpulsenergie für die verschiedenen Lasersteuersignalwerte, die während eines Markiervorgangs auftreten, ist bei einer Ausführungsform der Erfindung vorgesehen, dass zusätzlich eine weitere Leistungs- oder Pulsenergiemesseinrichtung vorhanden ist, die eine relative Leistungsmessung oder Laserplusenergiemessung ausführt. Diese ist vorzugsweise mittels eines Halbleiterbauelements, insbesondere einer lichtempfindlichen Diode, ausgebildet. Die erfassten relativen Leistungsschwankungen oder Pulsenergieschwankungen können analog den ermittelten absoluten Leistungswerten/Pulsenergiewerten verwendet werden, um zwischen zwei Kalibrierschritten für bestimmte Helligkeitswerte eine kurzzeitige Anpassung der Zuordnungsfunktion zu bewirken.

Bei einer bevorzugten Ausführungsform der Erfindung ist daher vorgesehen, dass nach dem Markieren einer vorfestgelegten Anzahl von Sicherheitsdokumenten ein Kalibrierschritt für mindestens einen Helligkeitswert ausgeführt wird. Bei einer Ausführungsform der Erfindung wird zwischen dem Markieren von zwei Sicherheitsdokumenten ein Kalibrierschritt nur für einen Helligkeitswert ausgeführt. Bei einer anderen Ausführungsform ist vorgesehen, dass aufeinanderfolgende Kalibrierschritte für verschiedene Helligkeitswerte ausgeführt werden, sofern keine Anpassung der Kalibrierung notwendig ist. Es versteht sich, dass am Beginn einer Inbetriebnahme einer Lasermarkierungsvorrichtung jeweils eine Kalibration für alle gewünschten Helligkeitswerte auszuführen ist. Im Dauerbetrieb sind dann aber lediglich einzelne Kalibrierschritte für einzelne Helligkeitswerte notwendig, um die Kalibrierung zu überprüfen und um Zeit zu sparen. Falls Zeit kein limitierender Faktor ist, sollte immer die vollständige Kalibrierung durchgeführt werden.

In der Regel kann nach dem Ausführen eines Kalibrierschrittes für einen Helligkeitswert, bei dem eine Änderung der Zuordnungsfunktion vorgenommen wurde, eine erforderliche Änderung der Zuordnungsfunktion für andere Helligkeitswerte extrapoliert werden. Wird eine solche Extrapolation vorgenommen, so kann bei einem Ausführen eines nachfolgenden Kalibrierschrittes für einen dieser anderen Helligkeitswerte erreicht werden, dass der Kalibrierschritt keine weitere Änderung der Zuordnungsfunktion notwendig macht. Wird die Kalibrierung so ausgeführt, dass für jeden Helligkeitswert, für den eine Kalibrierung vorgenommen wird, solange Kalibrierungsschritte ausgeführt werden, bis keine Anpassung der Zuordnungsfunktion im Rahmen einer vorgegebenen Toleranz mehr notwendig ist, so führt eine solche Extrapolation zu einer deutlichen Beschleunigung einer Kalibration, bei der mehrere Helligkeitswerte kalibriert werden, sobald für einen Helligkeitswert eine Anpassung der Zuordnungsfunktion notwendig war. Auch bei der Kalibration anlässlich der Inbetriebnahme führt eine Extrapolation zu einer Beschleunigung der gesamten Kalibrierung.

Bei einer Ausführungsform ist vorgesehen, dass ein Kalibrierschritt für denselben Helligkeitswert unmittelbar wiederholt wird, wenn eine Anpassung der Kalibrierung über ein Ändern der Zuordnungsfunktion notwendig ist. Es wird somit bei dieser Ausführungsform ein weiterer Kalibrierschritt für denselben Helligkeitswert durchgeführt, sofern in dem zuvor ausgeführten Kalibrierschritt eine Änderung der Zuordnungsfunktion notwendig war.

Wird zwischen dem Markieren von Sicherheitsdokumenten nur ein Kalibrierschritt ausgeführt, so ist bei einer Ausführungsform vorgesehen, dass der ausgewählte Helligkeitswert zyklisch variiert wird. Somit wird nach einer vorfestgelegten Anzahl von Sicherheitsdokumenten jeweils jeder vorkommende Helligkeitswert einer Kalibrationsüberprüfung bzw. Kalibration unterzogen.

Bei einer anderen Ausführungsform ist vorgesehen, dass der Helligkeitswert jeweils stochastisch ermittelt wird. Möglicherweise auftretende Langzeitdrifts, die eine zyklische Schwankung aufweisen, können bei diesem Verfahren die Kalibration nicht nachteilig beeinflussen bzw. besser aufgespürt werden.

Bei einer bevorzugten Ausführungsform werden während eines Kalibrierschritts bei der Ermittlung der Laserlichtleistung oder Laserpulsenergie mehrere Laserpulse auf den absolut messenden Messkopf geführt und eine Mittlung über mehrere Laserpulse ausgeführt. Eine solche Mittelung ist insbesondere sinnvoll, wenn der absolut messende Messkopf eine Messträgheit aufweist, die Größer als eine Repetitionsrate des verwendeten Lasers ist. Kann der absolut messende Messkopf Messungen mit einer Messfrequenz von 20 kHz ausführen und wird ein Laser verwendet der eine Wiederholfrequenz von 100 kHz besitzt, so ist eine solche Mittelung sinnvoll. Andernfalls wäre eine Verwendung einer Laserpulsselektionseinrichtung notwendig, die beispielsweise nur jeden fünften Laserpuls auf den Messkopf lenkt oder zu diesem Passieren lässt. Beispielsweise könnte hierfür eine Verschlussklappe, eine steuerbare Blende oder ein Blendenrad verwendet werden.

Nachfolgend wird die Erfindung unter Bezugnahme auf eine Zeichnung näher erläutert. Hierbei zeigen:
- Fig. 1: eine schematische Darstellung einer Vorrichtung zur Lasermarkierung und
- Fig. 2: ein schematisches Ablaufdiagramm einer Ausführungsform eines Verfahrens zum Lasermarkieren.

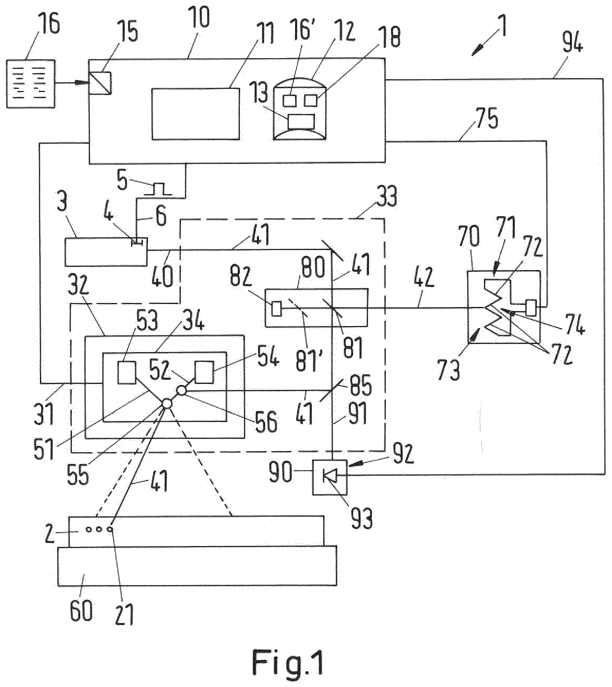

In Fig. 1 ist eine Vorrichtung 1 zum Lasermarkieren eines Sicherheitsdokuments 2 schematisch dargestellt. Größenverhältnisse der beschriebenen Bestandteile entsprechen nicht den realen Gegebenheiten. Die Vorrichtung 1 umfasst einen Laser 3, der vorzugsweise als Pulslaser ausgebildet ist. Der Laser 3 verfügt über einen Steuereingang 4, über den ein Lasersteuersignal 5 empfangbar ist, mit Hilfe dessen eine Laserlichtleistung bzw. eine Pulsenergie steuerbar ist.

Das Lasersteuersignal 5 wird von einer Steuereinrichtung 10 erzeugt. Diese umfasst vorzugsweise einen Mikroprozessor 11 sowie eine Speichereinheit 12, in welcher Programmcode 13 abgelegt ist, der auf den Mikroprozessor 11 ausführbar ist. Im Zusammenwirken des Mikroprozessors 11, der Speichereinheit 12 sowie des Programmcodes 13 ergibt sich bei dessen Ausführung die Funktionalität der Steuereinrichtung 10. Diese ist so ausgebildet, dass sie über eine Schnittstelle 15 Grafikinformationen 16 erfassen kann, die eine in das Sicherheitsdokument 2 zu markierende Grafik mit unterschiedlichen Helligkeitswerten beschreibt. Die Steuereinrichtung kann als Personalcomputer (PC) ausgebildet sein. Alternativ kann die Steuereinrichtung jedoch auch als Einsteckkarte für einen Computer oder als eigenständige Einheit ausgebildet sein.

Jeder zwei- oder dreidimensionale Position der Grafik ist somit ein Helligkeitswert bzw. Graustufenwert zugeordnet. Die Grafikinformationen sind beispielsweise als Tupel ausgebildet, die jeweils Ortskoordinaten für eine Position einer Markierung sowie einen Helligkeits- bzw. Graustufenwert für diese Markierung umfassen. Vorzugsweise werden die empfangenen Grafikinformationen 16' in der Speichereinheit 12 zwischengespeichert. Jedem Helligkeitswert ist für einen bestimmten Dokumentenrohling bzw. Sicherheitsdokument 2 eine bestimmte Laserlichtleistung bzw. Laserpulsenergie zugeordnet, die erforderlich ist, um den entsprechenden Helligkeitswert in dem Sicherheitsdokument 2 zu markieren. Ein Zusammenhang zwischen den Helligkeitswerten und den benötigten Laserleistungen/Pulsenergien ist vorbekannt, jedoch in der Regel nicht über eine lineare Funktion darstellbar. Dennoch existiert eine Zuordnungsfunktion 18, die den Helligkeitswerten eine Laserlichtleistung bzw. Laserpulsenergie zuordnet.

Diese Zuordnungsfunktion 18 bzw. deren Parametrisierung ist bei der dargestellten Ausführungsform ebenfalls in der Speichereinheit 12 abgelegt. Bei anderen Ausführungsformen kann die Zuordnungsfunktion in den Programmcode 13 integriert sein.

Bei wieder anderen Ausführungsformen kann die Zuordnungsfunktion 18 gemeinsam mit den Grafikinformationen 16 bereitgestellt werden oder getrennt der Steuereinrichtung 10 übertragen und beispielsweise über die Schnittstelle 15 empfangen werden. Dies ist dann vorteilhaft, wenn unterschiedliche Typen von Sicherheitsdokumenten 2 bzw. Sicherheitsdokumentenrohlingen markiert werden sollen, die eine unterschiedliche stoffliche Zusammensetzung aufweisen, sodass die benötigte (Soll-)Laserlichtleistung bzw. (Soll-)Laserpulsenergie zum Erreichen eines bestimmten Helligkeitswerts für die unterschiedlichen Sicherheitsdokumentenrohlinge unterschiedlich ist.

Der Zusammenhang zwischen einem Helligkeitswert und der zur Ausbildung dieses Helligkeitswertes benötigten Laserpulsenergie, wird bei der Dokumententwicklung ermittelt. Hierzu werden in ein Dokument eines entsprechenden Dokumenttyps Bildpunkte mit konstanter Laserpulsenergie in einem vorgegeben Raster markiert. Mittels eines Messgeräts, beispielsweise eines Densiometers, wird der sich ergebende Graustufenwert oder Helligkeitswert ermittelt. So wird für das vorgegebene Raster eine Zuordnung von Helligkeitswert und Laserpulsenergie ermittelt, indem das Verfahren iterativ für verschiedene Laserpulsenergien ausgeführt wird. Aufgrund der Kenntnis des Rasters kann auf die Helligkeit eines einzelnen Bildpunktes bei einer bestimmten Laserpulsenergie zurückgeschlossen werden. Werden Markierungen mit unterschiedlichen Bildpunktabständen vorgenommen, so kann dieses gesamte Verfahren auch für mehrere Raster ausgeführt werden. Je nach verwendetem Raster (Bildpunktabstand) sind zum Erzeugen eines flächigen Dokumentabschnitts, der einen vorgegebenen homogenen Helligkeitseindruck (Graustufenwert) hervorruft und jeweils mittels mit gleicher Energie erzeugter Bildpunkte gebildet ist, unterschiedliche Laserpulsenergien erforderlich. Grob gilt je gröber das Raster ist (je größer die Punktabstände sind), desto größer muss die Laserpulsenergie der einzelnen gleichartigen Laserpulse sein, um denselben Farbeindruck eines flächigen Gebiets zu erzeugen. Alle diese Überlegungen sind jedoch für das Erzeugen der Grafikinformationen von Bedeutung. Beim Markieren wird von der Steuereinrichtung somit abhängig von dem verwendeten Raster anhand der Zuordnungsfunktion für dieses Raster die benötigte Laserpulsenergie ausgewählt. Wird ein Dokument mit Bildpunkten markiert, welche in unterschiedlichen Rastern aufgebracht werden, so kann die Zuordnungsfunktion als Funktion zweier Variablen aufgefasst werden. Die Laserpulsenergie für einen vorgegebenen Helligkeitswert ist dann auch noch von der Bildpunktschrittweite abhängig. Die Bildpunktschrittweite kann aber auch als Scharparameter einer Schar von Zuordnungsfunktionen aufgefasst werden. Diese Betrachtung dürfte der praktischen Anwendung am nächsten kommen. Unabhängig davon, welche konkrete Ausgestaltung gewählt wird, erfolgt in der Steuereinrichtung eine Zuordnung zwischen einem Helligkeitswert der Grafikinformation und einem Steuerwert zur Erzeugung einer vorgegebenen Laserpulsenergie. Diese Zuordnungsfunktion wird durch das erfindungsgemäße Verfahren bei der Kalibrierung angepasst.

Um eine Markierung der Grafikinformation in dem Sicherheitsdokument 2 vorzunehmen, d.h. die in den Grafikinformationen 16 enthaltene Grafik in dem Sicherheitsdokument 2 auszubilden, wird von der Steuereinrichtung 10 anhand der Grafikinformationen 16 ein Positionssteuersignal 31 sowie ein Lasersteuersignal 5 erzeugt. Das Lasersteuersignal 5 wird mittels einer Steuerleitung 6 auf den Steuereingang 4 des Lasers 3 geführt und hierüber die Laserlichtleistung bzw. Pulsenergie des erzeugten und abgestrahlten Laserlichts 40 gesteuert.

Über das Positionssteuersignal 31 wird eine Positionssteuereinrichtung 32 angesteuert. Diese ist bei der dargestellten Ausführungsform Bestandteil einer Strahlführungsoptik 33, welche das von dem Laser 3 erzeugte Laserlicht 40 auf das Sicherheitsdokument 2 führt. Die Positionssteuereinrichtung 32, welche beispielsweise eine Zweiachsablenkeinrichtung 34 sein kann, welche wiederum zwei um zueinander im Wesentlichen senkrecht orientierte Achsen 51, 52 und mit einem Galvanoantrieb 53, 54 versehene schwenkbare Ablenkspiegel 55, 56 umfasst. Das Positionssteuersignal 31 ist oder wird mit dem Lasersteuersignal 5 in der Weise zeitlich korreliert bzw. synchronisiert erzeugt und dem Laser 3 bzw. der Positionssteuereinrichtung 32 zugeführt, dass das Laserlicht 40 mit der einem gewünschten Helligkeitswert zugeordneten Laserlichtleistung bzw. Laserpulsenergie an dem entsprechenden Ort auf oder in dem Sicherheitsdokument eingestrahlt wird, der der Position des entsprechenden Helligkeitswerts gemäß der Grafikinformationen entspricht. Sukzessive oder iterativ wird so die in den Grafikinformationen 16 gespeicherte Grafik in das Sicherheitsdokument 2 über Lasermarkierungen 21 markiert, welches in einer Halterung bzw. Dokumentaufnahme 60 aufgenommen ist.

Zwar ist die zum Ausbilden eines bestimmten Graustufenwerts benötigte Laserlichtleistung bzw. Laserpulsenergie für einen bestimmten Sicherheitsdokumenttyp bzw. einen Typ von Sicherheitsdokumentrohling, bei Vernachlässigung von möglicherweise auftretenden Fertigungsschwankungen der Sicherheitsdokumente oder Sicherheitsdokumentenrohling, genau bekannt, jedoch ist die tatsächlich von dem Laser 3 bereitgestellte Laserlichtleistung des Laserlichts 40 bzw. dessen Laserpulsenergie nicht präzise voraussagbar. Dies hat unterschiedliche Ursachen, beispielsweise haben Alterungseffekte von elektronischen Komponenten innerhalb des Lasers 3, optische Justageeinstellungen in dem Laser 3, Alterungserscheinungen des Lasermediums oder der optischen Pumpvorrichtung, Verschmutzungen auf Elementen zur Strahlführung des Laserlichts 40 (Linsen, Spiegel etc) usw. Einfluss auf die tatsächlich bereitgestellte Laserlichtleistung bzw. Laserpulsenergie für einen bestimmten, an dem Steuereingang 4 angelegten Steuerwert. Daher ist es notwendig, vor einer Erstinbetriebnahme, bei einer Inbetriebnahme nach einer längeren Betriebspause als auch von Zeit zu Zeit während des Betriebs eine Kalibration in der Weise auszuführen, dass sichergestellt wird, dass die durch das Laserlicht erzeugte Markierung in dem Sicherheitsdokument den Helligkeitswert aufweist, der gemäß der Grafikinformationen vorgesehen ist.

Eine Messung der Laserpulsenergie wird in der Strahlführung möglichst nahe dem eigentlichen Markierungsort ausgeführt. Dieses bedeutet, dass nur noch möglichst wenige Elemente der Strahlführung zwischen dem Auskoppelort des Laserlichts aus der Strahlführung und dem Markierungsort angeordnet sind.

Im Stand der Technik wurde dies dadurch bewerkstelligt, dass Markierungen in einem Sicherheitsdokument vorgenommen wurden und optisch mit Vorgaben verglichen wurden und entsprechend bei Abweichungen Korrekturen an einer Zuordnungsfunktion vorgenommen wurden.

Bei dem hier vorgeschlagenen Verfahren und der hier vorgeschlagenen Vorrichtung 1 zum Ausführen von Lasermarkierungen in einem Sicherheitsdokument 2 umfasst die Vorrichtung 1 einen Messkopf 70, welcher in der Lage ist, eine Laserlichtleistung oder eine Laserpulsenergie absolut zu bestimmen. Dies bedeutet, dass der Messkopf selber gegenüber einem absoluten Standard entweder geeicht oder in vergleichbarer Weise gegenüber einem absoluten Standard kalibriert ist. Technisch lässt sich ein solcher absolut messender Messkopf 70 beispielsweise in Form einer Thermosäule 71 realisieren. Eine Thermosäule 71 umfasst elektrisch in Reihe geschaltete thermisch parallel angeordnete Thermoelemente 72. Eine Seite 73 der Thermoelemente wird hierbei mit dem Laserlicht beaufschlagt. Eine andere Seite 74 der Thermoelemente 72 wird vor der Strahlung geschützt und gegebenenfalls gekühlt. Das Laserlicht 40 wird auf der einen Seite 73 der Thermoelemente 72 absorbiert und ein Wärmestrom entlang eines Wärmeleiters, den beispielsweise die Thermoelemente 72 selbst bilden können, wird gemessen und als Signal ausgewertet. Hierüber lässt sich die deponierte Laserlichtleistung oder -energie präzise absolut vermessen. Die gemessene Laserlichtleistung oder -energie wird in Form eines Kalibriersignals 75 der Steuereinrichtung 10 zugeführt.

Um die Laserlichtleistung absolut messen zu können, muss ein definierter Anteil 42 des Laserlichts 40 auf oder in den Messkopf 70 geführt werden. Hierfür ist eine Auskoppeleinheit 80 vorgesehen. In der dargestellten Ausführungsform umfasst die Auskoppeleinheit 80 einen Strahlteiler 81, der den definierten Anteil 42 des Laserlichts 40 aus dem Strahlengang 41 des Laserlichts 40 für das Markieren des Sicherheitsdokuments 2 auskoppelt. Bei einigen Ausführungsformen kann dieser Strahlteiler 81 permanent in dem Strahlengang 41 angeordnet sein. Um jedoch eine mit einem geringen statistischen Fehler behaftete Messgröße für die Laserlichtleistung oder -energie zu erhalten, muss ein nennenswerter Anteil des Laserlichts 40 ausgekoppelt werden. Es wird daher bevorzugt, dass die Auskoppeleinheit 80 ausgebildet ist, das zur Auskopplung verwendete Element, hier den Strahlteiler 81, nur während der Kalibrierung in den Strahlengang 41 zu bewegen. Hierfür ist eine Antriebseinheit 82 vorgesehen, die in der dargestellten Ausführungsform in der Lage ist, den Strahlteiler linear zu bewegen. In der dargestellten Stellung findet sich der Strahlteiler 81 im Strahlengang 41, um den definierten Anteil 42 des Laserlichts 40 in den Messkopf 70 auszukoppeln. Gestrichelt ist die Stellung des Strahlteilers 81' dargestellt, in der sich dieser nicht in dem Strahlengang 41 befindet. In dieser Stellung steht die gesamte Laserlichtleistung oder -energie für das Markieren zur Verfügung.

Das Kalibriersignal 75 wird in der Steuereinrichtung 10 ausgewertet und anhand des bekannten Anteilsfaktors für den definierten Anteil 42 des Laserlichts 40, welcher aus dem Strahlengang 41 an den Strahlteiler 81 ausgekoppelt wird, wird auf die zur Markierung an dem Sicherheitsdokument 2 zur Verfügung stehende Laserlichtleistung bzw. Laserpulsenergie zurückgeschlossen. Hierbei können bekannte Verluste an weiteren optischen Elementen wie einem weiteren Strahlteiler 85 bzw. den Ablenkspiegeln 55, 56 der Positionssteuereinrichtung 32 berücksichtigt werden. Ebenso können systematische Abweichungen des Messkopfes oder anderer Komponenten einmalig bestimmt werden und mit in dem Anteilsfaktor berücksichtigt werden. Die so ermittelte Laserlichtleistung bzw. Laserpulsenergie wird dann mit jenen vorbekannten Werten der Soll-Laserlichtleistung oder Soll-Laserpulsenergie verglichen, die die benötigte Leistung bzw. Energie für das jeweilige Sicherheitsdokument 2 angeben, um einen bestimmten Helligkeitswert zu erzeugen. Wird eine Abweichung oberhalb eines Schwellenwerts, welcher Helligkeitswert abhängig sein kann, festgestellt, so wird die Zuordnungsfunktion 18 entsprechend verändert, um die tatsächlich erzeugte Laserlichtleistung des Laserlichts 40 in Übereinstimmung mit dem Vorgabewert für den entsprechenden Helligkeitswert zu bringen. Während eines solchen Kalibrierschritts wird das Lasersteuersignal 5 für einen bestimmten Helligkeitswert konstant gehalten und erst nach dem Ermitteln, dass eine Abweichung zu dem Vorgabewert vorliegt, die Zuordnungsfunktion und entsprechend dann auch gegebenenfalls das Lasersteuersignal verändert. Bevorzugt wird die durch die Änderung herbeigeführte Laserlichtleistung unmittelbar anschließend geprüft und die Kalibrierschritte sooft ausgeführt, bis für den entsprechenden Helligkeitswert die korrekte Laserlichtleistung seitens des Lasers 3 bereitgestellt wird.

Bei einer Erstinbetriebnahme oder nach einer längeren Betriebspause wird eine Kalibrierung vorzugsweise für sämtliche Helligkeitswerte ausgeführt, die in den Grafikinformationen angefordert werden können. Im Betrieb, in dem fortlaufend oder in Intervallen Sicherheitsdokumente individuell mit Grafikinformationen markiert werden, wird die Kalibrierung in der Regel nur zwischen dem Markieren von Sicherheitsdokumenten bzw. nur nach dem Markieren einer vorgegebenen Anzahl von Sicherheitsdokumenten überprüft. Bei einer Ausführungsform wird nach jedem Dokument oder einer Anzahl von Sicherheitsdokumenten nur ein Helligkeitswert hinsichtlich seiner Kalibration geprüft. Dieses kann nacheinander zyklisch, d.h. jeweils nach einem Markieren eines weiteren Dokuments bzw. einer weiteren Anzahl von Sicherheitsdokumenten, für die einzelnen auftretenden Helligkeitswerte ausgeführt werden. Bei einer anderen Ausführungsform wird der jeweils zwischen dem Markieren einer vorgegebenen Anzahl von Sicherheitsdokumenten geprüfte Helligkeitswert stochastisch festgelegt. Hierdurch können auch systematisch auftretende Schwankungen erkannt bzw. eliminiert werden.

Um auf mögliche Kurzzeitschwankungen reagieren zu können, ist bei einigen Ausführungsformen zusätzlich ein weiterer Strahlteiler 85 vorgesehen, der permanent im Strahlengang angeordnet ist und nur einen kleinen weiteren Anteil 91 des Laserlichts aus dem Strahlengang auskoppelt. Dieser weitere Anteil 91 wird auf ein die Laserlichtleistung/ -energie relativ messendes Messelement 92 geführt, welches vorzugsweise ein Halbleiterbauelement, besonders bevorzugt eine Photodiode 93, umfasst. Die Photodiode stellt ein Regelsignal 94 bereit, welches verwendet werden kann, um kurzzeitige Schwankungen der Laserlichtleistung/Laserpulsenergie für die einzelnen Helligkeitswerte ähnlich der Laserlichtkalibration auszugleichen. Hierbei dienen die unmittelbar nach der Kalibration oder am Anfang einer Markierung von Sicherheitsdokumenten erfassten Regelsignalwerte als Referenzwerte, gegenüber denen Abweichungen ermittelt werden. Die Werte des von der Photodiode bereitgestellten Regelsignals 94 geben jedoch nur eine relative Tendenz für die erfasste Laserpulsenergie bzw. Laserpulsleistung an.

Bei der dargestellten Ausführung wird die Positionierung des Laserlichts 40 gegenüber dem Sicherheitsdokument 2 über verschwenkbare Ablenkspiegel 55, 56, die mit Galvanoantrieben 53, 54 ausgerüstet sind, bewerkstelligt. Bei anderen Ausführungsformen kann eine Lichtleitfaser relativ zu dem Sicherheitsdokument 2 bewegt werden. Für die Erfindung ist es unwesentlich, wie die Positionssteuereinrichtung im Detail ausgestaltet ist. Jede Positionssteuereinrichtung, die in der Lage ist, das Laserlicht 40 relativ zu dem Sicherheitsdokument 2 so zu positionieren, dass dieses zeitlich synchronisiert eine entsprechende Laserlichtleistung bzw. Pulsenergie aufweist, sodass der zu dem Ort zugehörige Helligkeitswert gemäß den Grafikinformationen in dem Sicherheitsdokument gespeichert wird, ist einsetzbar.

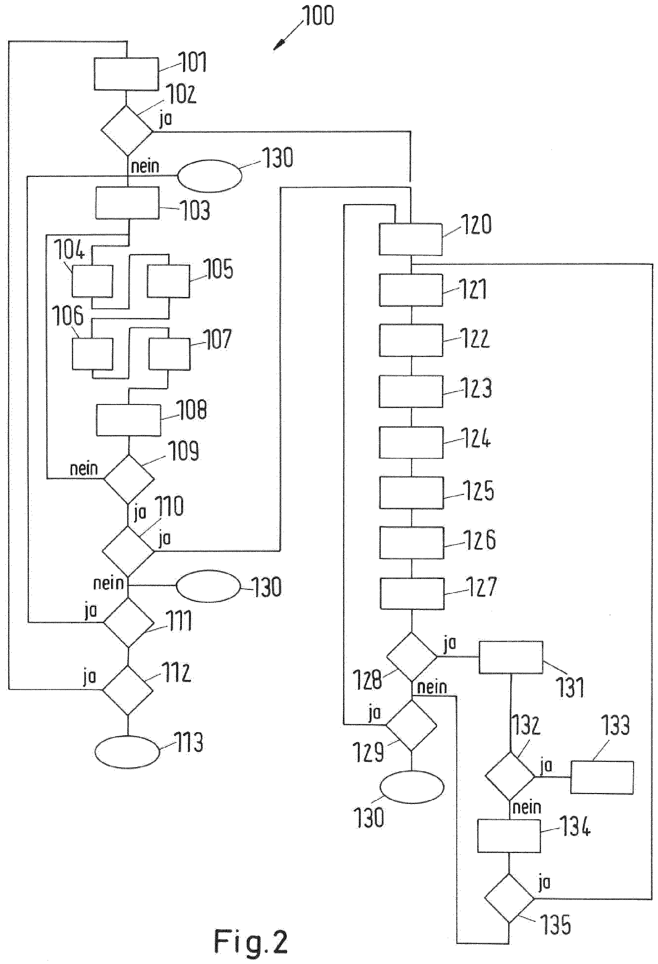

In Fig. 2 ist schematisch ein Ablaufdiagramm eines Verfahrens zur Lasermarkierung dargestellt. Das Verfahren zum Lasermarkieren eines Sicherheitsdokuments umfasst in der dargestellten Ausführungsform zunächst einen Verfahrensschritt des Empfangens einer Zuordnungsfunktion 101, welche für einen bestimmten Dokumententyp die gewünschten Helligkeitswerte in benötigte Laserlichtleistungen oder Laserpulsenergien überführt, d.h. diese zuordnet. Dieser Schritt kann bei einigen Ausführungsformen entfallen, sofern die Zuordnungsfunktion bereits fest in die Steuereinrichtung einprogrammiert ist.

Bei der dargestellten Ausführungsform wird in einer Abfrage 102 geprüft, ob eine Kalibrierung ausgeführt werden soll oder nicht. Dieses ist beispielsweise bei der Erstinbetriebnahme oder nach langer Betriebsunterbrechung, Tausch des Lasers etc. notwendig. Wie eine Kalibrierung ausgeführt wird, ist weiter unten beschrieben.

Wird keine Kalibrierung ausgeführt oder ist dieses abgeschlossen, so werden in einem weiteren Schritt die Grafikinformationen empfangen 103, welche die Positions- und Helligkeitswerte umfassen, welche eine zu markierende Grafik repräsentieren.

Anhand der Grafikinformationen wird zu einem entsprechenden Helligkeitswert unter Verwendung der Zuordnungsfunktion ein Lasersteuersignal erzeugt 104. Der Steuerwert des Lasersteuersignals repräsentiert den dem entsprechenden Helligkeitswert zugeordneten Steuerwert, der zum Herbeiführen einer entsprechenden Laserlichtleistung/ Laserpulsenergie zum Ausführen der Markierung mit der entsprechenden Helligkeit notwendig ist.

Zugehörig korreliert mit dem Lasersteuersignal wird ein Positionssteuersignal erzeugt 105. Das Lasersteuersignal steuert einen Laser, der ein Laserlicht der entsprechenden Laserlichtleistung bzw. Laserpulsenergie erzeugt 106. Korreliert hiermit, wird eine Positionssteuereinrichtung angesteuert und so positioniert 107, dass das Laserlicht an die korrekte Position auf oder in dem Sicherheitsdokument geführt wird, an der die Markierung mit dem entsprechenden Helligkeitswert ausgeführt werden soll. Entsprechend wird ein Bildpunkt der Grafikinformationen in dem Sicherheitsdokument markiert 108. Anschließend wird geprüft, ob die Grafik fertiggestellt ist 109. Ist dies nicht der Fall, so wird mit dem Verfahrensschritt "Erzeugen eines Lasersteuersignals" 104 für einen neuen Bildpunkt fortgefahren. Ist die Grafik fertiggestellt, wird überprüft, ob eine Kalibration ausgeführt werden soll 110. Hierzu kann beispielsweise überprüft werden, ob eine vorgegebene Anzahl von Sicherheitsdokumenten seit dem Ausführen eines vorangegangenen Kalibrierschritts markiert ist. Bei anderen Ausführungsformen kann diese Abfrage 110 entfallen, wenn nach jedem Sicherheitsdokument ein Kalibrierschritt ausgeführt wird. Soll kein Kalibrierschritt ausgeführt werden, wird überprüft, ob ein weiteres Sicherheitsdokument des gleichen Typs zu markieren ist 111. Soll dies erfolgen, so wird mit dem Empfangen von Grafikinformtionen 103 fortgefahren. Soll kein Sicherheitsdokument des gleichen Typs markiert werden, wird geprüft, ob ein Sicherheitsdokument eines anderen Typs markiert werden soll 112. In diesem Fall wird das Verfahren mit dem Empfangen einer neuen Zuordnungsfunktion 101 fortgesetzt. Andernfalls endet das Markierverfahren 113.

Wird ein Kalibrierschritt ausgeführt, so wird zunächst ein Helligkeitswert festgelegt 120. Gemäß dem Helligkeitswert wird dann das Lasersteuersignal erzeugt 121 und Laserlicht der entsprechenden Laserlichtleistung erzeugt 122. Aus dem Strahlengang zum Markieren des Sicherheitsdokuments wird ein definierter Anteil des Laserlichts ausgekoppelt 123. Dies kann beispielsweise erfolgen, indem ein Auskoppelspiegel oder Strahlteiler in den Strahlengang gefahren wird.

Das ausgekoppelte Laserlicht wird auf einen absolut messenden Messkopf geführt und mit diesem die Laserlichtleistung bzw. Laserpulsenergie absolut vermessen 124. Das Messergebnis wird in Form eines Kalibriersignals bereitgestellt 125. Das Kalibriersignal wird anschließend ausgewertet, um anhand des bekannten ausgekoppelten Anteils auf die tatsächlich zur Verfügung stehende Laserlichtleistung zurückzuschließen 126, die am Sicherheitsdokument für eine Markierung zur Verfügung steht. Hierbei können weitere Laserlichtleistungsverluste an weiteren optischen Komponenten im Strahlengang berücksichtigt werden.

Die so ermittelte für die Markierung zur Verfügung stehende Laserlichtleistung wird mit einem Vorgabewert für den entsprechenden Helligkeitswert verglichen 127. Anschließend wird geprüft, ob die tatsächlich ermittelte zur Verfügung stehende Laserlichtleistung von dem Vorgabewert, d.h. der Soll-Laserlichtleistung bzw. Soll-Laserpulsenergie, um mehr als eine Toleranzschwelle abweicht 128. Ist dies nicht der Fall, wird in einem nachfolgenden Schritt 129 geprüft, ob die Kalibration für einen weiteren Helligkeitswert ausgeführt werden soll. Soll die Kalibration für einen weiteren Helligkeitswert ausgeführt werden, so wird mit dem Verfahrensschritt "Festlegen des Helligkeitswerts/Auswählen des Helligkeitswerts" 120 fortgefahren. Ansonsten ist die Kalibration beendet 130. In diesem Fall wird an der entsprechenden Stelle des Markierungsverfahrens fortgefahren, an dem die Verzweigung in den Kalibrationsschritt erfolgt ist.

Ist die Abweichung der ermittelten zur Verfügung stehenden Laserlichtleistung von der vorgegebenen Soll-Laserlichtleistung oder die ermittelte zur Verfügung stehende Laserpulsenergie von der Soll-Laserpulsenergie größer als ein vorgegebener Schwellenwert, so wird die Zuordnungsfunktion angepasst 131. Hierfür wird beispielsweise überprüft, ob die ermittelte zur Verfügung stehende Laserlichtleistung geringer als der Vorgabewert ist 132. In diesem Fall wird die Zuordnungsfunktion so geändert, dass der Steuerwert, der dem Helligkeitswert zugeordnet wird, erhöht wird 133. Andernfalls wird der Steuerwert, der dem Helligkeitswert zugeordnet wird, erniedrigt 134, da zwangsläufig die ermittelte Laserlichtleistung/Laserpulsenergie größer als der Vorgabewert (Sollwert) ist. Anschließend wird geprüft, ob die Änderung der Zuordnungsfunktionen in einem weiteren Kalibrierschritt überprüft werden soll 135. Ist dies der Fall, so wird mit dem Verfahrensschritt "Erzeugen eines Lasersteuersignals" 121 fortgefahren. Andernfalls wird mit der Abfrage 129 fortgefahren, ob ein weiterer Kalibrierschritt für einen anderen Helligkeitswert ausgeführt werden soll.

Bei dem oben dargestellten Verfahren zur Lasermarkierung wird vorzugsweise nach jedem Empfangen einer neuen Zuordnungsfunktion 101 eine Kalibration für sämtliche mögliche Helligkeitswerte ausgeführt, wie dies in den Verfahrensschritten 120 bis 135 angegeben ist. Eine solche Kalibration wird auch bei der ersten Inbetriebnahme oder nach längeren Betriebsunterbrechungen ausgeführt.

Für den Fachmann versteht es sich, dass lediglich beispielhafte Ausführungsformen der Erfindung beschrieben sind.

### Bezugszeichenliste

- 1: Vorrichtung zum Lasermarkieren
- 2: Sicherheitsdokument
- 3: Laser
- 4: Steuereingang
- 5: Lasersteuersignal
- 6: Steuerleitung
- 10: Steuereinrichtung
- 11: Mikroprozessor
- 12: Speichereinheit
- 13: Programmcode
- 15: Schnittstelle
- 16: Grafikinformationen
- 18: Zuordnungsfunktion
- 21: Lasermarkierung
- 31: Positionssteuersignal
- 32: Positionssteuereinrichtung
- 33: Strahlführungsoptik
- 34: Zweiachsablenkeinrichtung
- 40: Laserlicht
- 41: Strahlengang für das Markieren
- 42: definierter Anteil des Laserlichts
- 51,52: Achsen
- 53,54: Galvanoantriebe
- 55,56: Ablenkspiegel
- 60: Aufnahme
- 70: Messkopf
- 71: Thermosäule
- 72: Thermoelemente
- 73: eine Seite
- 74: andere Seite
- 75: Kalibriersignal
- 80: Auskoppeleinheit
- 81, 81': Strahlteiler
- 82: Antriebseinheit
- 85: weiterer Strahlteiler
- 90: relative Messeinrichtung
- 91: weiterer Anteil
- 92: Messelement
- 93: Photodiode
- 94: Regelsignal
- 100: Verfahren
- 101-113: Verfahrensschritte
- 120-135: Verfahrensschritte (Kalibration)

## Patentansprüche

1. Verfahren zum Lasermarkieren von Sicherheitsdokumenten (2) umfassend die Schritte:
a) Erfassen von Grafikinformationen (16), die eine Grafik mit unterschiedlichen Helligkeitswerten beschreiben;
b) Erzeugen eines Positionssteuersignals (31) und eines Lasersteuersignals (5) abhängig von den Grafikinformationen (16), wobei jedem Helligkeitswert eine Soll-Laserlichtleistung oder Soll-Laserpulsenergie zugeordnet ist, die zum Herbeiführen einer Lasermarkierung (21) mit dem entsprechenden Helligkeitswert in einem Sicherheitsdokument (2) benötigt wird und beim Erzeugen des Lasersteuersignals (5) mittels einer Zuordnungsfunktion (18) jedem Helligkeitswert ein Steuerwert zugeordnet wird, der zum Erzeugen von Laserlicht (40) mit der entsprechenden Laserlichtleistung gemäß der Soll-Laserlichtleistung oder Laserpulsenergie gemäß der Soll-Laserpulsenergie vorgesehen ist,
c) Ansteuern eines Lasers (3) mittels des Lasersteuersignals (5) und Abstrahlen von Laserlicht (40) mit einer Laserlichtleistung oder Laserpulsenergie gemäß dem Lasersteuersignal; und
d) zeitlich angepasstes Ansteuern mindestens einer Positionssteuereinrichtung (32) mittels des Positionssteuersignals (31), sodass das abgestrahlte Laserlicht (40) relativ zu dem Sicherheitsdokument (2) positioniert wird,
sodass durch iteratives Ausführen der Verfahrensschritte b) bis d) eine positionsgerechte Markierung des Sicherheitsdokuments (2) mit der die unterschiedlichen Helligkeitswerte aufweisenden Grafik ausgeführt wird,
**dadurch gekennzeichnet, dass**
mindestens ein Kalibrierschritt ausgeführt wird, wobei beim Ausführen des Kalibrierschrittes das Lasersteuersignal (5) mit einem Steuerwert für einen Helligkeitswert erzeugt und während des Kalibrierschritts konstant gehalten wird, ein definierter Anteil des Laserlichts (40) aus einem Strahlengang (41) für die Lasermarkierung ausgekoppelt und in einen absolut messenden Messkopf (70) geführt wird und eine Leistung des auf den Messkopf (70) geführten ausgekoppelten Anteils des Laserlichts (40) oder dessen in dem Messkopf deponierte Energie absolut gemessen wird,
und aus der gemessenen Leistung oder Energie des ausgekoppelten Anteils des Laserlichts (40) die für die Markierung zur Verfügung stehende Leistung oder Pulsenergie ermittelt wird und die ermittelte Leistung mit der Soll-Laserlichtleistung verglichen wird oder die ermittelte Pulsenergie mit der Soll-Laserpulsenergie verglichen wird und die Kalibrierung über eine Änderung der Zuordnungsfunktion (18) vorgenommen wird, wenn bei dem Vergleich eine Differenz oberhalb einer vorgegebenen Tolleranzschwelle ermittelt wird.

2. Verfahren nach Anspruch 1, **dadurch gekennzeichnet, dass** die Leistung oder -energie des Laserlichts (40) mittels eines eine Thermosäule (71) umfassenden Messkopfes (70) gemessen wird.

3. Verfahren nach Anspruch 1, **dadurch gekennzeichnet, dass** nach jedem Markieren eines Sicherheitsdokuments (2) oder einer vorfestgelegten Anzahl von Sicherheitsdokumenten ein Kalibrierschritt für einen Helligkeitswert ausgeführt wird.

4. Verfahren nach einem der vorangehenden Ansprüche, **dadurch gekennzeichnet, dass** ein Kalibrierschritt für denselben Helligkeitswert unmittelbar wiederholt wird, wenn eine Anpassung der Zuordnungsfunktion vorgenommen ist.

5. Verfahren nach Anspruch 3 oder 4, **dadurch gekennzeichnet, dass** aufeinanderfolgend Kalibrierschritte für verschiedene Helligkeitswerte ausgeführt werden, sofern keine Anpassung der Zuordnungsfunktion notwendig ist.

6. Verfahren nach einem der vorangehenden Ansprüche, **dadurch gekennzeichnet, dass** das Laserlicht (40) als gepulstes Laserlicht bereitgestellt wird und während des Kalibrierschritts eine Mittelung über mehrere Laserpulse ausgeführt wird.

7. Verfahren nach einem der vorangehenden Ansprüche, **dadurch gekennzeichnet, dass** ein weiterer festgelegter Anteil (42) des Laserlicht (40) auf eine Relativ-Leistungs-/Energiemesseinrichtung (90) ausgekoppelt wird, die eine Pulsleistung oder Pulsenergie der einzelnen Pulse relativ zu zuvor erfassten Pulsleistungen oder Pulsenergien erfasst, und die relative gemessne Pulsleistung oder Pulsenergie verwendet wird, eine Regelung des Lasersteuersignals zum Ausgleich von Leistungsschwankungen oder Pulsenergieschwankungen auszuführen.

8. Vorrichtung (1) zum Lasermarkieren von Sicherheitsdokumenten (2) umfassend
a) eine Steuereinrichtung (10) mit einer Schnittstelle (15) zum Erfassen von Grafikinformationen, die eine Grafik mit unterschiedlichen Helligkeitswerten beschreiben;
b) wobei die Steuereinrichtung (10) ausgebildet ist, ein Positionssteuersignal (31) und ein Lasersteuersignal (5) abhängig von den Grafikinformationen (16) zu erzeugen; wobei jedem Helligkeitswert eine Soll-Laserlichtleistung oder Soll-Laserpulsenergie zugeordnet ist, die zum Herbeiführen einer Lasermarkierung mit dem entsprechenden Helligkeitswert in einem Sicherheitsdokument benötigt wird und mittels einer Zuordnungsfunktion jedem Helligkeitswert ein Steuerwert zugeordnet wird, der zum Erzeugen von Laserlicht (40) mit der entsprechenden Laserlichtleistung oder Laserpulsenergie vorgesehen ist,
c) einen Laser (3), dessen Laserlichtleistung mittels des Lasersteuersignals (5) steuerbar ist, und Laserlicht (40) mit einer Laserlichtleistung oder Laserpulsenergie gemäß dem Lasersteuersignal abstrahlt;
und
d) eine Strahlführungsoptik zum Führen des von dem Laser (3) abgestrahlten Laserlichts (40) auf das Sicherheitsdokuments (2) und
e) mindestens eine mittels des Positionssteuersignals (31) ansteuerbare Positionssteuereinrichtung zum Positionieren des Laserlicht (40) zeitlich angepasst an die mittels des Lasersteuersignals (5) festgelegte Laserlichtleistung oder Laserpulsenergie relativ zu dem Sicherheitsdokument (2), sodass eine positionsgerechte Markierung des Sicherheitsdokuments mit der die unterschiedlichen Helligkeitswerte aufweisenden Grafik ausführbar ist,
**dadurch gekennzeichnet, dass**
die Vorrichtung (1) einen absolut messenden Messkopf (70) sowie eine Auskoppeleinheit (80) zum Auskoppeln eines definierten Anteils (42) des Laserlichts (40) aus einem Strahlengang (41) für die Lasermarkierung und Führen des ausgekoppelten Anteils auf den absolut messenden Messkopf (70) umfasst, wobei der Messkopf (70) ausgeführt ist, eine Leistung oder Energie des auf den Messkopf geführten ausgekoppelten Anteils (42) des Laserlichts (40) absolut zu messen und ein die absolut gemessene Lichtleistung oder deponierte Energie repräsentierendes Kalibriersignal an die Steuereinrichtung (10) auszugeben, wobei die Steuereinrichtung (10) ausgebildet ist, im Betrieb der Vorrichtung mindestens einen Kalibrierschritt auszuführen, bei dem das Lasersteuersignal (5) für einen Helligkeitswert erzeugt und während des Kalibrierschritts konstant gehalten wird, aus der durch das Kalibriersignal repräsentierten gemessenen Leistung oder Energie des ausgekoppelten definierten Anteils (42) des Laserlichts (40) die für die Markierung zur Verfügung stehende Leistung oder Energie zu ermitteln und die ermittelte Leistung mit der Soll-Laserlichtleistung oder die ermittelte Pulsenergie mit der Soll-Laserpulsenergie zu vergleichen und die Kalibrierung über eine Änderung der Zuordnungsfunktion (18) erfolgt, wenn bei dem Vergleich eine Differenz oberhalb einer vorgegebenen Tolleranzschwelle ermittelt ist.

9. Vorrichtung nach Anspruch 8, **dadurch gekennzeichnet, dass** der Messkopf (70) eine Thermosäule (70) umfasst.

10. Vorrichtung nach Anspruch 8 oder 9, **dadurch gekennzeichnet, dass** die Auskoppeleinheit (80) ein in den Strahlengang (41) bewegbares Auskoppelelement umfasst.

## Claims

1. Method for laser marking of security documents (2), comprising the steps of:
a) detecting graphics information (16) which describes a graphic with different brightness values;
b) generating a position control signal (31) and a laser control signal (5) depending on the graphics information (16), wherein a reference laser light output or reference laser pulse energy is allocated to each brightness value, which is required in order to induce a laser marking (21) with the corresponding brightness value in a security document (2) and, at the generating of the laser control signal (5), by means of an allocation function (18) a control value is allocated to each brightness value, this control value being provided for producing laser light (40) with the corresponding laser light power in accordance with the reference laser light power or laser pulse energy in accordance with the reference laser pulse energy,
c) actuating a laser (3) by means of the laser control signal (5) and radiation of laser light (40) with a laser light power or laser pulse energy in accordance with the laser control signal; and
d) time-adjusted actuation of at least one position control device (32) by means of the position control signal (31), such that the radiated laser light (40) is positioned relative to the security document (2),
such that, by iterative performance of the method steps b) to d) a position-correct marking is carried out of the security document (2) with the graphics comprising the different brightness values,
**characterised in that**
at least one calibration step is carried out, wherein, when the calibration step is carried out, the laser control signal (5) is generated with a control value which relates to a brightness value. This value is kept constant during the calibration step. A defined proportion of the laser light (40) is decoupled from the beam path (41) for the purpose of the laser marking, this proportion of the laser light is guided into an absolutely measuring measuring head (70), a power of the decoupled proportion of the laser light (40) which is guided to the measuring head (70), or the energy from this which is deposited in the measuring head, is absolutely measured,
and, from the measured power or energy of the decoupled proportion of the laser light (40), the power or pulse energy available for the marking is determined, and the determined power is compared with the reference laser light power, or the determined pulse energy is compared with the reference laser pulse energy, and the calibration is carried by a change in the allocation function (18) if, during the comparison, a difference above a predetermined tolerance threshold is determined.

2. Method according to claim 1, **characterised in that** the power or energy of the laser light (40) is measured by means of a measuring head (70) comprising a thermopile (71).

3. Method according to claim 1, **characterised in that**, after each marking of a security document (2) or a predetermined number of security documents, a calibration step for a brightness value is carried out.

4. Method according to any one of the preceding claims, **characterised in that** a calibration step for the same brightness value is repeated immediately if an adjustment of the allocation function is carried out.

5. Method according to claim 3 or 4, **characterised in that** sequential calibration steps for different brightness values are carried out, inasmuch as no adjustment of the allocation function is necessary.

6. Method according to any one of the preceding claims, **characterised in that** the laser light (40) is provided as a pulsed laser light, and during the calibration step an averaging is carried out over a plurality of laser pulses.

7. Method according to any one of the preceding claims, **characterised in that** a further fixed proportion (42) of the laser light (40) is decoupled onto a relative power/energy measuring device (90), which determines a pulse power or pulse energy of the individual pulses relative to previously determined pulse capacities or pulse energies, and the relatively measured pulse power or pulse energy is used to carry out a regulation of the laser control signal in order to compensate for power fluctuations or pulse energy fluctuations.

8. Device (1) for the laser marking of security documents (2), comprising
a) a control device (10) with an interface (15) for detecting graphics information which describes a graphic with different brightness values;
b) wherein the control device (10) is configured such as to generate a position control signal (31) and a laser control signal (5) depending on the graphics information (16); wherein a reference laser light power or reference laser pulse energy is allocated to each brightness value, which is required in order to induce a laser marking with the corresponding brightness value in a security document, and, by means of an allocation function, a control value is allocated to each brightness value, which is provided for producing laser light (40) with the corresponding laser light power or laser pulse energy,
c) a laser (3), of which the laser light power can be controlled by means of the laser control signal (5), and laser light (40) is radiated with a laser light power or laser pulse energy in accordance with the laser control signal;
and
d) a beam guidance lens for guiding the laser light (40) radiated by the laser (3) onto the security document (2), and
e) at least one position control device, controllable by means of the position control signal (31), for the positioning of the laser light (40), time-adjusted to the laser light power or laser pulse energy determined by means of the laser control signal (5), relative to the security document (2), such that a position-correct marking of the security document can be carried out with the graphics comprising the different brightness values,
**characterised in that**
the device (1) comprises an absolutely measuring measuring head (70) and a decoupling unit (80) for decoupling a defined proportion (42) of the laser light (40) from a beam path (41) for the laser marking and guiding the decoupled proportion to the absolutely measuring head (70), wherein the measuring head (70) is configured such as to measure absolutely a power or energy of the decoupled proportion (42) of the laser light (40) guided to the measuring head and issuing a calibration signal representing the absolutely measured light power or deposited energy to the control device (10), wherein the control device (10) is configured, during the operation of the device, to carry out at least one calibration step, in which the laser control signal (5) for a brightness value is generated and is kept constant during the calibration step, and from the measured power or energy of the defined decoupled proportion (42) of the laser light (40), represented by the calibration signal, the power or energy is determined which is available for the marking, and the determined power is compared with the reference laser light power or the determined pulse energy is compared with the reference laser pulse energy, and the calibration takes place by a change in the allocation function (18) if, during the comparison, a difference above a predetermined tolerance threshold is determined.

9. Device according to claim 8, **characterised in that** the measuring head (70) comprises a thermopile (70).

10. Device according to claim 8 or 9, **characterised in that** the decoupling unit (80) comprises a decoupling element which can be moved into the beam path (41).

## Revendications

1. Procédé de marquage au laser de documents de sécurité (2) comprenant les étapes suivantes :
a) la détection d'informations graphiques (16) qui décrivent un graphique avec différentes valeurs de luminosité ;
b) la génération d'un signal de commande de position (31) et d'un signal de commande de laser (5) en fonction des informations graphiques (16), dans lequel à chaque valeur de luminosité est attribuée une puissance de consigne de lumière laser ou une énergie de consigne d'impulsion laser, qui est nécessaire pour produire un marquage au laser (21) avec la valeur de luminosité correspondante dans un document de sécurité (2) et, lors de la génération du signal de commande de laser (5), à chaque valeur de luminosité est attribuée au moyen d'une fonction d'attribution (18) une valeur de commande qui est prévue pour la génération de lumière laser (40) avec la puissance de lumière laser correspondante selon la puissance de consigne de lumière laser ou avec l'énergie d'impulsion laser correspondante selon l'énergie de consigne d'impulsion laser,
c) la commande d'un laser (3) au moyen du signal de commande de laser (5) et le rayonnement de lumière laser (40) avec une puissance de lumière laser ou une énergie d'impulsion laser selon le signal de commande de laser ; et
d) la commande adaptée temporellement d'au moins un système de commande de position (32) au moyen du signal de commande de position (31) de sorte que la lumière laser (40) rayonnée est positionnée relativement au document de sécurité (2), de sorte que, par une exécution itérative des étapes de procédé b) à d), un marquage à la position correcte du document de sécurité (2) est exécuté avec le graphique présentant les différentes valeurs de luminosité,
**caractérisé en ce que**
au moins une étape d'étalonnage est exécutée, dans lequel au cours de l'exécution de l'étape d'étalonnage, le signal de commande de laser (5) est généré avec une valeur de commande pour une valeur de luminosité et est maintenu constant durant l'étape d'étalonnage, une partie définie de la lumière laser (40) est découplée d'une trajectoire de faisceau (41) pour le marquage au laser et amenée dans une tête de mesure (70) effectuant des mesures absolues, et une puissance de la partie de la lumière laser (40) découplée et amenée sur la tête de mesure (70) ou de son énergie déposée dans la tête de mesure est mesurée en valeur absolue,
et, à partir de la puissance mesurée ou de l'énergie de la partie de lumière laser (40) découplée, la puissance ou l'énergie d'impulsion disponible pour le marquage est déterminée et la puissance déterminée est comparée à la puissance de consigne de lumière laser ou l'énergie d'impulsion déterminée est comparée à l'énergie de consigne d'impulsion laser et l'étalonnage est réalisé par le biais d'une modification de la fonction d'attribution (18) si une différence au-delà d'un seuil de tolérance prédéfini est déterminée lors de la comparaison.

2. Procédé selon la revendication 1, **caractérisé en ce que** la puissance ou l'énergie de la lumière laser (40) est mesurée au moyen d'une tête de mesure (70) comprenant une thermopile (71).

3. Procédé selon la revendication 1, **caractérisé en ce que**, après chaque marquage d'un document de sécurité (2) ou d'un nombre prédéfini de documents de sécurité, une étape d'étalonnage est exécutée pour une valeur de luminosité.

4. Procédé selon l'une quelconque des revendications précédentes, **caractérisé en ce qu'**une étape d'étalonnage est répétée immédiatement pour la même valeur de luminosité lorsqu'une adaptation de la fonction d'attribution est réalisée.

5. Procédé selon la revendication 3 ou 4, **caractérisé en ce que** des étapes d'étalonnage successives sont exécutées pour différentes valeurs de luminosité dans la mesure où aucune adaptation de la fonction d'attribution n'est nécessaire.

6. Procédé selon l'une quelconque des revendications précédentes, **caractérisé en ce que** la lumière laser (40) est fournie en tant que lumière laser pulsée et, pendant l'étape d'étalonnage, une moyenne est exécutée sur plusieurs impulsions laser.

7. Procédé selon l'une quelconque des revendications précédentes, **caractérisé en ce qu'**une autre partie définie (42) de la lumière laser (40) est découplée vers un système de mesure relative de puissance ou d'énergie (90), qui détecte une puissance d'impulsion ou une énergie d'impulsion des impulsions individuelles relativement aux puissances d'impulsion ou aux énergies d'impulsion détectées auparavant, et la puissance d'impulsion ou l'énergie d'impulsion relative mesurée est employée pour exécuter une régulation du signal de commande de laser pour la compensation de fluctuations de puissance ou de fluctuations d'énergie d'impulsion.

8. Dispositif (1) de marquage au laser de documents de sécurité (2) comprenant
a) un système de commande (10) avec une interface (15) pour détecter des informations graphiques qui décrivent un graphique avec différentes valeurs de luminosité ;
b) dans lequel le système de commande (10) est conçu pour générer un signal de commande de position (31) et un signal de commande de laser (5) en fonction des informations graphiques (16) ; dans lequel à chaque valeur de luminosité est attribuée une puissance de consigne de lumière laser ou une énergie de consigne d'impulsion laser qui est nécessaire pour produire un marquage au laser avec la valeur de luminosité correspondante dans un document de sécurité et à chaque valeur de luminosité est attribuée au moyen d'une fonction d'attribution une valeur de commande qui est prévue pour la génération de lumière laser (40) avec la puissance de lumière laser ou l'énergie d'impulsion laser correspondante,
c) un laser (3) dont la puissance de lumière laser peut être commandée au moyen du signal de commande de laser (5), et qui rayonne une lumière laser (40) avec une puissance de lumière laser ou une énergie d'impulsion laser selon le signal de commande de laser ;
et
d) une optique de guidage de rayonnement pour guider la lumière laser (40) rayonnée par le laser (3) sur le document de sécurité (2) et
e) au moins un système de commande de position, commandable au moyen du signal de commande de position (31), destiné au positionnement de la lumière laser (40), d'une manière adaptée temporellement à la puissance de lumière laser ou à l'énergie d'impulsion laser définie au moyen du signal de commande de laser (5), relativement au document de sécurité (2) de sorte qu'un marquage, à la position correcte, du document de sécurité peut être exécuté avec le graphique présentant les différentes valeurs de luminosité,
**caractérisé en ce que**
le dispositif (1) comprend une tête de mesure (70) effectuant une mesure absolue, ainsi qu'une unité de découplage (80) servant à découpler une partie définie (42) de la lumière laser (40) d'une trajectoire de faisceau (41) pour le marquage au laser et servant au guidage de la partie découplée sur la tête de mesure (70) effectuant une mesure absolue, dans lequel la tête de mesure (70) est réalisée pour mesurer une valeur absolue d'une puissance ou d'une énergie de la partie (42), découplée et guidée sur la tête de mesure, de la lumière laser (40) et pour fournir au dispositif de commande (10) un signal d'étalonnage représentant la puissance de lumière ou l'énergie déposée mesurée en valeur absolue, dans lequel le dispositif de commande (10) est conçu, lors du fonctionnement du dispositif, pour exécuter au mois une étape d'étalonnage selon laquelle le signal de commande de laser (5) est généré pour une valeur de luminosité et est maintenu constant durant l'étape d'étalonnage, pour déterminer à partir de la puissance ou de l'énergie, mesurée représentée par le signal d'étalonnage, de la partie définie (42) découplée de la lumière laser (40), la puissance ou l'énergie disponible pour le marquage et pour comparer la puissance déterminée à la puissance de consigne de lumière laser ou l'énergie d'impulsion déterminée à l'énergie de consigne d'impulsion laser, et l'étalonnage est effectué par une modification de la fonction d'attribution (18) si, lors de la comparaison, une différence est déterminée au-delà d'un seuil de tolérance prédéfini.

9. Dispositif selon la revendication 8, **caractérisé en ce que** la tête de mesure (70) comprend une thermopile (70).

10. Dispositif selon la revendication 8 ou 9, **caractérisé en ce que** l'unité de découplage (80) comprend un élément de découplage déplaçable dans la trajectoire de faisceau (41).
